Europäisches Patentamt

European Patent Office

Office européen des brevets

(19)

(11) EP 0 774 298 A1

(12) EUROPÄISCHE PATENTANMELDUNG

(43) Veröffentlichungstag:
21.05.1997 Patentblatt 1997/21

(51) Int. Cl.⁶: **B01J 35/06**

(21) Anmeldenummer: 96117308.5

(22) Anmeldetag: 29.10.1996

(84) Benannte Vertragsstaaten:
**AT BE DE DK ES FR GB IT NL**

(30) Priorität: **18.11.1995 DE 19543102**

(71) Anmelder: **W.C. Heraeus GmbH**
**D-63450 Hanau (DE)**

(72) Erfinder:
• **Gorywoda, Marek, Dr.**
**63452 Hanau (DE)**
• **Lund, Jonathan**
**61389 Schmitten (DE)**
• **Lupton, David Francis, Dr.**
**63571 Gelnhausen (DE)**

(74) Vertreter: **Kühn, Hans-Christian**
**Heraeus Holding GmbH,**
**Stabsstelle Schutzrechte,**
**Heraeusstrasse 12-14**
**63450 Hanau (DE)**

(54) **Goldfreies Edelmetallnetz**

(57)     Um ausgehend von bekannten Edelmetallnetzen aus Palladium und aus mindestens einem weiteren Edelmetall, ein Rückgewinnungsnetz bereitzustellen, das preiswert in seiner Herstellung ist und bei dem geringe Scheidekosten anfallen und das sowohl für den Einsatz als Rückgewinnungsnetz als auch als Katalysatornetz geeignet ist, wird erfindungsgemäß vorgeschlagen, daß das goldfreie Edelmetallnetz aus Palladium Platin in einer Konzentration im Bereich von 8 bis 25 Gew.-% enthält.

Printed by Rank Xerox (UK) Business Services
2.14.3/3.4

## Beschreibung

Die Erfindung betrifft ein goldfreies Edelmetallnetz aus Palladium und aus mindestens einem weiteren Platingruppenmetall.

Bei der Salpetersäure-Herstellung durch Oxidation von Ammoniak werden Katalysatornetze eingesetzt, die üblicherweise aus einer Platinlegierung, beispielsweise aus PtRh10, PtRh8, PtRh5 oder PtRh5Pd5 bestehen. Während der katalytischen Oxidation verlieren diese Katalysatornetze Edelmetall, also in erster Linie Platin. Zum Auffangen des Edelmetalls sind unmittelbar hinter den Katalysatornetzen daher üblicherweise sogenannte Rückgewinnungsnetze angeordnet, auf denen sich das Edelmetall abscheidet. Die Rückgewinnungsnetze bestehen üblicherweise aus einer Palladiumlegierung. Es sind Rückgewinnungsnetze aus der Legierung PdAu20 und Palladium-Gold-Legierungen mit weiteren Bestandteilen, wie beispielsweise Iridium oder Platin bekannt. In der DE-A1 28 55 102 wird beispielsweise eine Legierung für Rückgewinnungsnetze aus 72 Gew.-% Pd, 19 Gew.-% Au und 9 Gew.-% Pt beschrieben. Außerdem sind Rückgewinnungsnetze bekannt, die aus Palladium-Nickel-Legierungen PdNi5 oder aus Palladium-Kupfer-Legierungen PdCu5 bestehen. Während ihres Einsatzes verlieren die Pd-haltigen Rückgewinnungsnetze Palladium.

Zur Rückgewinnung des abgeschiedenen Edelmetalls (Platins) werden die Rückgewinnungsnetze chemisch aufgelöst und in ihre Legierungsbestandteile getrennt. Nach Entfernen des rückgewonnenen Platins können das Palladium und z. B. das Gold in ihrer ursprünglichen chemischen Zusammensetzung (PdAu20) erneut erschmolzen und für die Herstellung neuer Rückgewinnungsnetze verwendet werden.

Bei allen bekannten Rückgewinnungsnetzen ist für die Rückgewinnung des Edelmetalls (Platins) stets das oben beschriebene Scheidungs-Verfahren erforderlich, das aufwendig und mit hohen Kosten verbunden ist.

Der Erfindung liegt daher die Aufgabe zugrunde, ein Rückgewinnungsnetz anzugeben, das preiswert in seiner Herstellung ist und bei dem geringe Scheidekosten anfallen.

Weiterhin ist es bekannt, daß auch Rückgewinnungsnetze Ammoniak katalytisch oxidieren können. Die katalytische Wirkung der palladiumhaltigen Rückgewinnungsnetze ist aber geringer als die der Platin-Katalysatornetze. Üblicherweise werden in den Katalysatoreinsätzen bei der Ammoniakverbrennung mehrere aufeinandergelegte Netze verwendet. Es hat sich gezeigt, daß fast das gesamte Ammoniak innerhalb der ersten drei Netze oxydiert wird. Die den drei ersten Netzen nachgeschalteten Katalysatornetze dienen daher lediglich noch zum "Nachbrennen" des restlichen Ammoniaks. Diese nachgeordneten Netze können somit durch weniger katalytisch aktive Netze ersetzt werden. Hierfür bieten sich Rückgewinnungsnetze an, die dann eine doppelte Funktion haben, nämlich die Katalyse der Ammoniakverbrennung einerseits und die Rückgewinnung von Edelmetall andererseits. Dies ist aus der oben genannten DE-A1 28 55 102 bekannt. Es hat sich jedoch gezeigt, daß die Rückgewinnungsnetze aus Palladium-Legierungen mechanisch zu schwach sind, um Platin-Katalysatornetze über längere Zeit ersetzen zu können. Lediglich die Legierung PdAu20 weist eine hierfür ausreichende Stabilität auf.

Der Erfindung liegt daher auch die Aufgabe zugrunde, ein goldfreies Edelmetallnetz bereitzustellen, das sowohl für den Einsatz als Rückgewinnungsnetz als auch als Katalysatornetz geeignet ist.

Hinsichtlich des Rückgewinnungsnetzes wird die Aufgabe ausgehend von dem eingangs genannten Rückgewinnungsnetz erfindungsgemäß dadurch gelöst, daß das goldfreie Edelmetallnetz aus Palladium Platin in einer Konzentration im Bereich von 8 bis 25 Gew.-% enthält.

Bei der nachfolgenden Erläuterung wird davon ausgegangen, daß es sich bei dem auf dem Rückgewinnungsnetz abgeschiedenen Edelmetall um Platin handelt, dem geringe Mengen an anderen Legierungsbestandteilen, wie beispielsweise Rhodium beigemengt sein können.

Der wesentliche Vorteil des erfindungsgemäßen Edelmetallnetzes besteht darin, daß es nach seinem bestimmungsgemäßen Einsatz als Rückgewinnungsnetz nur zu einem ganz geringen Teil geschieden werden muß, um das auf dem Netz abgeschiedene Platin zurückzuerhalten. Dies beruht darauf, daß das Netz nach seinem bestimmungsgemäßen Einsatz zwar platinreicher ist als vorher, wobei aber zur Wiedereinstellung seiner ursprünglichen chemischen Legierungszusammensetzung es lediglich erforderlich ist, eine entsprechende Menge an Palladium zuzugeben. Dies ist sehr einfach möglich, beispielsweise durch schmelzmetallurgisches Zulegieren. Hierbei wird davon ausgegangen, daß Palladium der einzige weitere Legierungsbestandteil oder jedenfalls der einzige weitere Legierungsbestandteil ist, der die chemischen und mechanischen Eigenschaften der Legierung so wesentlich beeinflußt, daß seine Konzentration nicht veränderbar ist, ohne die Eigenschaften der Legierung unzulässig zu verändern, so daß der Palladiumgehalt in etwa konstant zu halten ist.

Zur Rückgewinnung der Menge des abgeschiedenen Platins wird von dem Netz derjenige Gewichtsanteil abgetrennt, aus dem sich dieser Platin-Anteil ergibt. Dieser Gewichtsanteil ist im Verhältnis zum Gewicht des Gesamtnetzes sehr klein. Nur in diesem gewichtsmäßig kleinen Anteil des Rückgewinnungsnetzes wird dann geschieden. Der Rest kann, wie oben dargelegt, nach Zulegieren von Palladium zur Herstellung eines neuen Rückgewinnungsnetzes eingesetzt werden. Dadurch werden die Kosten für die Edelmetallscheidung bei dem Rückgewinnungsnetz sehr gering gehalten.

Da das Edelmetallnetz goldfrei ist, entfällt die Scheidung von Gold. Eine Legierung ist daher "goldfrei" im Sinne dieses Anspruches, wenn ihr Goldgehalt gleich Null oder so gering ist, daß er die chemischen und mechanischen Eigen-

2

schaften der Legierung so wenig bestimmt, daß Änderungen des Goldgehaltes hierfür nicht ins Gewicht fallen und eine Scheidung daher nicht erforderlich ist.

Ein Edelmetallnetz, bei dem der Platingehalt im Bereich von 10 bis 20 Gew.-% liegt, hat sich als mechanisch besonders stabil erwiesen.

Es wird ein Edelmetallnetz bevorzugt, das zusätzlich bis zu 5 Gew.-% Rhodium enthält. Rhodium ist in den Katalysatornetzen üblicherweise enthalten und wird daher, ebenso wie Platin, auf dem Rückgewinnungsnetz abgeschieden. Es fällt jedoch dabei nur in sehr geringen Mengen an. Es hat sich gezeigt, daß solche geringen Mengen an Rhodium die mechanische Beständigkeit des Edelmetallnetzes sogar noch verbessern. Vorteilhafterweise liegt der Rhodiumgehalt deshalb bei höchstens 5 Gew.-%. Bei hohem Rhodiumgehalt läßt sich die Legierung nur schwer zum Draht verarbeiten. Daraus ergibt sich die angegebene Obergrenze von 5 Gew.-% Rhodium.

Besonders bewährt haben sich Edelmetallnetze, die gewebt, gestrickt oder gewirkt sind.

Überraschenderweise hat es sich gezeigt, daß das erfindungsgemäße Edelmetallnetz zwar vorteilhaft als Rückgewinnungsnetz eingesetzt werden kann, jedoch auch hervorragend als Katalysatornetz für die Ammoniakverbrennung bei der Salpetersäureherstellung geeignet ist. Das Netz verbindet eine hohe mechanische Stabilität mit einer ausreichend guten katalytischen Wirkung. Weiterhin ist Palladium wesentlich preiswerter als Platin und es weist eine geringere Dichte auf. Dadurch ist das erfindungsgemäße Katalysatornetz einerseits preisgünstiger herstellbar als die üblichen Platin-Katalysatornetze und es ist bei gleichem Volumen und gleicher Oberfläche leichter.

Nachfolgend wird das erfindungsgemäße Edelmetallnetz in seiner Funktion als Rückgewinnungsnetz anhand eines Ausführungsbeispiels näher erläutert.

Es wurden insgesamt drei Versuchsreaktoren für die Salpetersäureherstellung wie folgt bestückt:

Reaktor 1:    3 Katalysatornetze aus PtRh5 (Drahtdurchmesser 76 μm) / Trenn-Stütznetz /
             3 Rückgewinnungsnetze aus Pd95 (Drahtdurchmesser 76 μm) / Trenn-Stütznetz

Reaktor 2:    3 Katalysatornetze aus PtRh5 (Drahtdurchmesser 76 μm) / Trenn-Stütznetz /
             3 Rückgewinnungsnetze aus PdPt20 (Drahtdurchmesser 76 μm) / Trenn-Stütznetz

Reaktor 3:    3 Katalysatornetze aus PtRh5 (Drahtdurchmesser 76 μm) / Trenn-Stütznetz /
             3 Rückgewinnungsnetze aus PdAu20 (Drahtdurchmesser 76 μm) / Trenn-Stütznetz.

Die Reaktoren wurden mit Ammoniak beaufschlagt und für die Dauer von 80 Tagen unter einem Druck von ca. 5 bar, einer Temperatur von 870 °C und einer Belastung von 9,25 tN/m$^2$ Tag betrieben. Bei diesen Arbeitsbedingungen werden ansonsten üblicherweise 6 Katalysatornetze in jeden Reaktoren eingebaut, um das gesamte Ammoniak zu oxidieren. Im Ausführungsbeispiel waren sämtliche Edelmetallnetze gewirkt und entsprachen hinsichtlich ihrer Dichte gewebten Netzen mit 1024 Maschen/cm$^2$.

Nach dieser Versuchsdauer wurde bei den einzelnen Reaktoren der durchschnittliche Wirkungsgrad hinsichtlich der Ammoniakoxidation bestimmt:

| Reaktor 1 | 94,4 % |
|-----------|--------|
| Reaktor 2 | 95,9 % |
| Reaktor 3 | 96,1 % |

Der Wirkungsgrad von Reaktor 1 begann schon nach 30 Tagen zu fallen. Der Grund dafür liegt in der geringen mechanischen Stabilität der Pd95-Legierung. Nach dem Ausbau zeigten die Pd95-Rückgewinnungsnetze Löcher, während die Rückgewinnungsnetze der beiden übrigen Reaktoren noch unversehrt waren.

Nach den Versuchen wurden an den Rückgewinnungsnetzen folgende Kennwerte bestimmt:

Rückgewinnungsquote
Darunter wird das Verhältnis der an den Katalysatornetzen verlorenen Edelmetallmenge zu der an den Rückgewinnungsnetzen abgeschiedenen Edelmetallmenge verstanden.

Gewichtsveränderung
Diese entspricht der Gewichtsdifferenz des Rückgewinnungsnetzes vor und nach dem Versuch.

Konzentrationen an Edelmetallen

Hierunter wird die chemische Zusammensetzung der jeweiligen Rückgewinnungsnetze nach dem Versuch verstanden

| Reaktornummer | Gewichtsveränderung | Konzentration Rest: Pd | | | Rückgewinnungsquote |
|---|---|---|---|---|---|
| | | Pt % | Rh % | Au % | |
| 1 | 1.0895 | 16.7 | 0.19 | - | 73 % |
| 2 | 1.0758 | 34.2 | 0.22 | - | 76 % |
| 3 | 1.073 | 15.1 | 0.14 | 18.8 | 79 % |

Die vergleichsweise niedrige Rückgewinnungsquote der Pd95-Rückgewinnungsnetze (Reaktor 1) ist durch den während des Versuch bereits einsetzenden mechanischen Zerfall dieser Netze bedingt. Im Gegensatz dazu blieben die PdPt20- und die PdAu20-Rückgewinnungsnetze mechanisch stabil. Dies ist eine erste Voraussetzung dafür, daß die mechanisch stabilen PdAu20-Netze durch PdPt20-Netze ersetzt werden können.

Durch den Ersatz ergibt sich gegenüber den PdAu20-Rückgewinnungsnetzen der Vorteil, daß nach dem Einsatz der PdPt20-Rückgewinnungsnetze nur ein verhältnismäßig kleiner Anteil am Gesamtgewicht der gebrauchten Rückgewinnungsnetze geschieden weren muß, um den Anteil der an den Netz-Oberflächen aufgefangenen Edelmetalle zurückzuerhalten. Der gewichtsmäßig größte Teil dieser Rückgewinnungsnetze wird durch einfache Zugabe von Palladium schmelzmetallurgisch wieder auf annähernd die ursprüngliche Legierungs-Zusammensetzung gebracht. Dies macht die Spalte "Konzentration" gemäß obiger Tabelle deutlich.

Zweckmäßigerweise wird die am erfindungsgemäßen Rückgewinnungsnetz aufgefangene Menge von Rhodium bei der Aufarbeitung zu einem neuen Netz in dem Material belassen. Es zeigte sich, daß die mechanische Stabilität von PdPt-Legierungen, die Rhodium enthalten, noch höher liegt als die der rhodiumfreien Legierungen. Der Rhodiumgehalt wird daher dazu benutzt, die Platinkonzentration in der ursprünglichen PdPt20-Legierung zu reduzieren. Dabei zeigt 1 % Rhodium eine katalytische Wirkung, die etwa 2 % Platin entspricht.

Beispiel:

1 kg der PdPt20-Rückgewinnungsnetze haben nach dem Ausbau aus dem Reaktor 2 1.0758 kg gewogen. In dieser Menge waren 368 g Platin und 2.35 g Rhodium enthalten. Das Material aus den gebrauchten Rückgewinnungsnetzen wird zur Herstellung von neuen Rückgewinnungsnetzen verwendet. Aufgrund des zusätzlichen Rhodiumgehaltes wird die Legierungszusammensetzung der neuen Rückgewinnungsnetze zu: 19.8 % Pt, ca. 0.1 % Rh und Rest Pd festgelegt. Für 1 kg dieser Legierung werden daher in etwa die folgenden Mengen an Edelmetallen benötigt:

| Pt | 198 g |
|---|---|
| Rh | 2 g |
| Pd | 800 g |

Die Menge von 198 g Platin sind in

$$1075,8 \times \frac{198}{368} = 579 \text{ g}$$

des aus den gebrauchten Rückgewinnungsnetzen stammenden Materials enthalten. Diese Menge wird zur Herstellung der neuen Netze verwendet. Es müssen zusätzlich 421 g Palladium dazulegiert werden. Die restliche Menge, also ungefähr nur die Hälfte des gebrauchten Materials wird geschieden. Die zu scheidende Menge wird weiter reduziert, wenn das aus den gebrauchten Rückgewinnungsnetzen stammende Material zur Herstellung mehrerer oder eines schwereren Rückgewinnungsnetztes verwendet wird. Im besten Fall ist lediglich eine Zulegierung von Palladium und überhaupt keine Scheidung mehr erforderlich.

Bei dem beschriebenen Verfahren zur Verarbeitung und Herstellung der Rückgewinnungsnetze aus PdPt-Legierung reichert sich, nach mehreren Verarbeitungszyklen, der Rhodiumanteil an. Nach etwa 10 bis 20 Zyklen wird der Rhodiumanteil ca. 5 Gew.-% erreicht. Bei diesem hohen Rhodiumanteil läßt sich das Material nur noch schwer zu Drähten verarbeiten, so daß dann das gesamte Material der Rückgewinnungsnetze der Scheidung unterworfen wird.

**Patentansprüche**

1. Goldfreies Edelmetallnetz aus Palladium und aus mindestens einem weiteren Platingruppenmetall, dadurch gekennzeichnet, daß das Edelmetallnetz Platin in einer Konzentration im Bereich von 8 bis 25 Gew.-% enthält.

2. Goldfreies Edelmetallnetz nach Anspruch 1, dadurch gekennzeichnet, daß der Platingehalt im Bereich von 10 bis 20 Gew.-% liegt.

3. Goldfreies Edelmetallnetz nach Anspruch 1 oder 2, dadurch gekennzeichnet, daß es Rhodium in einer Menge von höchstens 5 Gew.-% enthält.

4. Goldfreies Edelmetallnetz nach einem der vorhergehenden Ansprüche, dadurch gekennzeichnet, daß es gewebt, gestrickt oder gewirkt ist.

5. Verwendung des Edelmetallnetzes nach einem der Ansprüche 1 bis 4 als Katalysatornetz und als Rückgewinnungsnetz für die Ammoniakverbrennung bei der Salpetersäureherstellung.

**Europäisches Patentamt**

# EUROPÄISCHER RECHERCHENBERICHT

Nummer der Anmeldung

EP 96 11 7308

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-3 873 675 (ROTERS HANS) 25.März 1975 *insgesamt* | 1-5 | B01J35/06 |
| X | US-A-4 412 859 (HATFIELD W ROBERT ET AL) 1.November 1983 * Spalte 7, Zeile 37 - Zeile 59 * | 1-5 | |

|  |
|---|
| RECHERCHIERTE SACHGEBIETE (Int.Cl.6) |
| B01J C01B |

Der vorliegende Recherchenbericht wurde für alle Patentansprüche erstellt

| Recherchenort | Abschlußdatum der Recherche | Prüfer |
|---|---|---|
| DEN HAAG | 3.Februar 1997 | Faria, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

                                                              
& : Mitglied der gleichen Patentfamilie, übereinstimmendes Dokument

EPO FORM 1503 03.82 (P04C03)